Europäisches Patentamt

European Patent Office

Office européen des brevets

(19)

(11) Veröffentlichungsnummer : **0 371 343 B1**

(12) **EUROPÄISCHE PATENTSCHRIFT**

(45) Veröffentlichungstag der Patentschrift :
22.04.92 Patentblatt 92/17

(51) Int. Cl.$^5$ : **C01G 23/053**, C01G 23/08

(21) Anmeldenummer : 89121252.4

(22) Anmeldetag : 17.11.89

(54) **Titandioxid, Verfahren zu seiner Herstellung und dessen Verwendung.**

(30) Priorität : 29.11.88 DE 3840196

(43) Veröffentlichungstag der Anmeldung :
06.06.90 Patentblatt 90/23

(45) Bekanntmachung des Hinweises auf die
Patenterteilung :
22.04.92 Patentblatt 92/17

(84) Benannte Vertragsstaaten :
BE DE ES FR GB IT NL

(56) Entgegenhaltungen :
DE-A- 1 592 428
DE-B- 1 207 363
GB-A- 930 535

(56) Entgegenhaltungen :
GB-A- 1 462 646
GB-A- 1 501 682
US-A- 3 018 186
PATENT ABSTRACTS OF JAPAN Band 10, Nr.
373 (C-391)(2430), 12.Dezember 1986;

(73) Patentinhaber : BAYER AG
W-5090 Leverkusen 1 Bayerwerk (DE)

(72) Erfinder : De Cleyn, Rene, Dr.
Max-Hermann-Lei 152
B-2130 Brasschaat (BE)
Erfinder : Thometzek, Peter, Dr.
Buschstrasse 169
W-4150 Krefeld (DE)
Erfinder : Rademachers, Jakob, Dr.
Hoeninghausstrasse 34
W-4150 Krefeld (DE)

EP 0 371 343 B1

Anmerkung : Innerhalb von neun Monaten nach der Bekanntmachung des Hinweises auf die Erteilung
des europäischen Patents kann jedermann beim Europäischen Patentamt gegen das erteilte europäische Patent Einspruch einlegen. Der Einspruch ist schriftlich einzureichen und zu begründen. Er gilt
erst als eingelegt, wenn die Einspruchsgebühr entrichtet worden ist (Art. 99(1) Europäisches Patentübereinkommen).

## Beschreibung

Die vorliegende Erfindung betrifft Titandioxid, ein Verfahren zu seiner Herstellung und seine Verwendung in glasartigen Emails und Schmelzglasuren als Trübungsmittel.

Titandioxid wird als Farbpigment entweder durch Umsetzung von $TiCl_4$ mit $O_2$ oder durch Hydrolyse einer schwefelsäurehaltigen, wäßrigen Lösung von Titanylsulfat und nachfolgender Kalzinierung hergestellt.

Im Falle des Sulfatprozesses wird die Titandioxidhydrat-Suspension in einem Drehrohrofen bei Verweilzeiten von 5 bis 20 Stunden kalziniert. Der bei der Hydrolyse anfallende Niederschlag besteht aus feinen Teilchen mit einer spezifischen BET-Oberfläche von 50-500 $m^2/g$, die eine starke Agglomerierung während der Kalzinierung erfahren.

Die sich durch Kalzinierung ergebenden Agglomerate bilden Teilchen von 0,1 bis 1,0 mm, die sich aus Primärteilchen von 0,2 bis 0,4 μm zusammensetzen. Dieses Material ist als Klinker oder auch als gemahlenes Pigment zur Einarbeitung in glasartige Emails oder Schmelzglasuren wenig geeignet, da es sich zusammenballt, wenn es in trockenem Zustand mit den übrigen Bestandteilen der Emailfritte gemischt wird, was zu einer unvollständigen und inhomogenen Lösung des Titandioxids während des Schmelzvorganges der Fritte führt.

In der deutschen Auslegeschrift 1 207 363 wird ein Verfahren zur Herstellung eines $TiO_2$-Produktes für die Einarbeitung in glasartigen Emails durch Kalzinierung von gefälltem Titandioxidhydrat beschrieben. Dabei wird ein gefälltes Titandioxidhydrat mit grober Teilchengröße, das aus Primärteilchen von 5 bis 20 μm besteht, mit einem gefällten Titandioxidhydrat feiner Teilchengröße, das aus Primärteilchen von vorwiegend unter 1 μm besteht, wie es bei der Herstellung von $TiO_2$-Pigmenten anfällt, gemischt, und die Mischung wird kalziniert. Der Nachteil dieses Verfahrens besteht darin, daß es aufgrund der zwei stark unterschiedlichen Titandioxidhydrate, die erst hergestellt werden müssen, sehr aufwendig wird. Weiterhin besteht der Nachteil derartig erhaltenem $TiO_2$ darin, daß es sich durch ein hohes Schüttgewicht von 1,4 bis 2 kg/l auszeichnet und eine niedrige spezifische Oberfäche von deutlich unter 1 $m^2$/g aufweist, was zu geringer Reaktivität beim Aufschmelzen in der Fritte führt.

In der US-A 2 721 787 werden freifließende, nichtstaubende Aggregate bestehend aus kalziniertem Anatas (Primärteilchengröße 0,2 bis 0,3 μm, spezifische Oberfläche 4,5 bis 9 $m^2/g$) und 0,1 bis 3 % eines anorganischen Bindemittels beschrieben. Diese Aggregate werden hergestellt, indem wäßrige Slurries aus hydroklassifizierten Titandioxidpigmenten, die aus der normalen Pigmentherstellung stammen, bei 150 bis 400°C sprühgetrocknet werden. Der Nachteil dieses Verfahrens liegt darin, daß zuerst kalzinierte Titandioxidpigmente hergestellt werden müssen, die dann in Wasser zur Herstellung einer Slurry aufgenommen werden, um diese Slurry danach sprühzutrocknen, um die beanspruchten Aggregate zu erhalten.

In der US-A 3 018 186 wird plättchenförmiges Titandioxid mit einem Durchmesser von 1-20 μm und einer Dicke von 0,01-0,5 μm beschrieben, das fast ausschließlich in der Rutilmodifikation vorliegt. Diese Plättchen werden hergestellt, indem eine Titanylsulfatlösung, die mindestens 5 und höchstens 20 % an Schwefelsäure enthält, in einer Flamme bei 800°C bis 1800°C und Verweilzeiten von 0,001-0,5 Sekunden kalziniert wird. Das erhaltene Material ist frei von Schwefelsäure und wird in keramischen und elektrischen Massen, Kunststoffen und Oberflächenbeschichtungen sowie als Füllstoff eingesetzt. Die eingesetzte Titanylsulfatlösung ist aufwendig herzustellen, da sie in reiner Form kein Zwischenprodukt des Pigmentherstellungsprozesses darstellt. Die durch Aufschluß von Titanerzen anfallende Lösung enthält erhebliche Mengen an Fremdelementen wie Fe, Al, Mg u.a.

Aufgabe war es daher, ein geeignetes Titandioxid, das als Trübungsmitel für glasartige Emails und Schmelzglasuren eingesetzt werden kann, zur Verfügung zu stellen.

Es wurde nun gefunden, daß das erfindungsgemäße Titandioxid die obengenannten Anforderungen erfüllt. Dieses Titandioxid weist überwiegend isometrische Primärteilchen der Größe von 0,5 bis 5,0 μm auf, die zu überwiegend sphärolithischen Partikeln mit Durchmessern von 1 bis 100 μm aggregiert sind, und hat eine BET-Oberfläche von 1 bis 4,5 $m^2/g$ und ein Schüttgewicht von 0,2 bis 1,3 kg/l. Die BET-Oberfläche wird nach DIN 66 131, Abschnitt 6, Okt. 1973 bestimmt (5-Punkt-Methode, Meßgas: Stickstoff, Adsorption bei der Temperatur des siedenden Stickstoffs, Annahme des Flächenbedarfs eines Stickstoffmoleküls von 0,162 $nm^2$, Vorbehandlung: 1 Stunde Ausheizen im Stickstoffstrom bei 130°C).

Dieses Titandioxid zeigt eine gute Stabilität, d.h., es zerfällt beim Mischen nicht in Feinkorn. Die Härte ist andererseits nicht so groß, so daß sich in Verbindung mit der Primärpartikelgröße von 0,5 bis 5 μm und der spezifischen Oberfläche von 1 bis 4,5 $m^2/g$ ein ausgezeichnetes Aufschlußverhalten des Titandioxids in der Emailschmelze ergibt. Die 1 bis 100 μm großen agglomerierten Partikel verteilen sich beim Mischen sehr gleichmäßig in der Fritte und schmelzen anschließend vollständig auf. Besonders günstig ist das Aufschlußverhalten, wenn das erfindungsgemäße Titandioxid ein Schüttgewicht von 0,2 bis 0,8 kg/l aufweist.

In der abgeschreckten Fritte bilden die Partikel titandioxidreiche Nahbezirke, die im Anfangsstadium des Emailbrands als Keimzellen für die Titandioxidrekristallisation wirken.

2

Im weiteren Verlauf des Emailbrands wird dann nahezu ausschließlich Anatas in geeigneter Kristallitgröße, isometrischer Form und gleichmäßiger Verteilung erzeugt, wodurch ein hohes Reflexionsvermögen bei ausgezeichneter Deckkraft erhalten wird.

In einer besonderen Ausführungsform liegt das erfindungsgemäße Titandioxid mit über 50 Gew.-% als Rutil vor und weist einen Sulfatgehalt unterhalb 0,5 Gew.-%, vorzugsweise unterhalb 0,3 Gew.-%, gerechnet als Sulfat und auf Titandioxid bezogen, sowie einen Titandioxidgehalt oberhalb 90 Gew.-% auf.

Restwassermengen bis zu 3 Gew.-%, bezogen auf Titandioxid, beeinflußen die Produktqualität nicht.

In einer weiteren Ausführungsform enthält das Titandioxid Oxide, Phosphate und/oder Silikate der Metalle Li, Na und/oder K in einer Menge von bis zu 0,5 Gew.-%, bezogen auf Titandioxid, und/oder Mg, Ca, Sr, Ba, Sn, Sb, Bi, Y, Zr, Zn, V, Nb, W und/oder Mo und/oder Oxide der Elemente P und/oder Si in einer Menge bis zu 10 Gew.-%, vorzugsweise bis zu 5 Gew.-%, bezogen auf Titandioxid. So verbessert beispielsweise ein Zusatz von $P_2O_5$ die $TiO_2$-Rekristallisation und somit die Trübung im Email. ein Zusatz von $WO_3$ den Farbton im Email und ein Zusatz von $K_2O$ in einer Menge von bis zu 0,5 Gew.-%, vorzugsweise von 0,1 bis 0,2 Gew.-%, bezogen auf $TiO_2$, das Aufschlußverhalten in der Fritte und den Farbton im Email, Überraschenderweise ist hierbei die ursprüngliche, räumliche Entfernung der Zusatzstoffe vom $TiO_2$-Korn für die nachfolgende $TiO_2$-Trübung von großer Wichtigkeit, d.h., ein Einbringen derselben Zusatzstoffe in derselben Menge direkt in die Fritte hätte einen weitaus geringeren Effekt zur Folge.

Gegenstand der Erfindung ist weiterhin ein geeignetes Verfahren zur Herstellung des erfindungsgemäßen Titandioxids, wobei Titandioxidhydrat mit einer BET-Oberfläche von 50 bis 500 $m^2/g$ einer Kurzzeitkalzination bei Verweilzeiten von 0,1 bis 60 Sekunden und bei Temperaturen von 800 bis 1600°C ausgesetzt wird.

Überraschend dabei ist, daß diese Kurzzeitkalzination des Titandioxidhydrates bei den obengenannten Temperaturen trotz der geringen Reaktionszeiten ein deutliches Kristallitwachstum zu 0,5 bis 5,0 μm großen, überwiegend isometrischen Primärteilchen sowie eine nahezu vollständige Säureabspaltung bewirkt. Die gesinterten Primärteilchen sind über Sinterbrücken zu 1 bis 100 μm großen Partikeln aggregiert, die als Pigment zur Einfärbung von Farben oder Kunststoffen nicht geeignet sind, jedoch ausgezeichnete Eigenschaften als Trübungsmittel in Emails aufweisen.

Das $TiO_2$-Hydrat kann über eine Ein- bzw. Mehrstoffdüse als wäßrige Suspension in den Kalzinierer eingetragen werden. Es ist jedoch auch möglich, das Ausgangsmaterial in Form einer pastösen Masse bzw. als trockenes Pulver dem Kalzinierer zuzuführen. Als Kurzzeitkalzinierer kommen übliche Apparaturen wie z.B. Heißgaszerstäubungsreaktoren, Reaktionszyklone oder Flash-Kalzinierer in Betracht, die normalerweise mit direkter Heizgaszuführung arbeiten. Eine indirekte Beheizung ist jedoch ebenfalls möglich.

Die Produktabscheidung erfolgt außerhalb der Kalzinierkammer beispielsweise über einen Zyklon oder elektrischen bzw. mechanischen Pulverabscheider.

In einer bevorzugten Ausführungsform wird die Kalzination des $TiO_2$-Hydrats zwischen 1000 und 1300°C bei Verweilzeiten von 0,1 bis 5 Sekunden durchgeführt.

Als Ausgangsmaterial für die Kurzzeitkalzination wird Titandioxidhydrat mit bis zu 30 Gew.-% Sulfat, bezogen auf Titandioxid oder vorzugsweise gefälltes schwefelsäurehaltiges Titandioxidhydrat eingesetzt, wie es z.B. beim Pigmentherstellungsprozeß nach dem Sulfatverfahren anfällt.

Dem Titandioxidhydrat können in einer bevorzugten Ausführungsform vor der Kalzination Hilfsstoffe in geeigneter Form untergemischt werden, die nach der Kalzination als Oxide, Phosphate und/oder Silikate der Elemente Li, Na und/oder K in einer Menge von bis zu 0,5 Gew.-%, bezogen auf Titandioxid und/oder Mg, Ca, Sr, Ba, Sn, Sb, Bi, Y, Zi, Zn, V, Nb, W und/oder Mo und/oder als Oxide der Elemente P und/oder Si in einer Menge bis zu 10 Gew.-%, vorzugsweise bis zu 5 Gew.-%, bezogen auf Titandioxid, vorliegen.

Auch Bindemittel wie z.B. Wasserglas, Carboxymethylcellulosen oder Polyvinylalkohole und/oder Verflüssiger wie z.B. Polyphosphate oder Polyacrylate können dem $TiO_2$-Hydrat vor der Kalzinierung in einer Menge von jeweils 0,1 bis 5 Gew.-% zugemischt werden.

Ein erheblicher Vorteil des Verfahrens liegt darin, daß man in lediglich einem Verfahrensschritt direkt von einem $TiO_2$- Pigmentvorprodukt, einem gefällten $TiO_2$-Hydrat, mit Hilfe der kostengünstigen Kurzzeitkalzination zum Endprodukt gelangt.

Die Kalzinierung des $TiO_2$-Hydrats wird in oxidierender oder reduzierender Atmosphäre durchgeführt. Die reduzierende Fahrweise hat den Vorteil, daß im Falle des Einsatzes von schwefelsäurehaltigem $TiO_2$-Hydrat in den bei der Kalzinierung aus dem Sulfat entstehenden gasförmigen Spaltprodukten mehr $SO_2$ als $SO_3$ vorliegt. Bei der anschließenden Produktabscheidung außerhalb der Reaktionskammer wird $SO_2$ weniger stark an die $TiO_2$-Oberfläche zurückadsorbiert als $SO_3$.

Das erfindungsgemäße Titandioxid kann als Trübungsmittel bei der Herstellung von Emails oder Schmelzglasuren verwendet werden.

Nachfolgend wird die Erfindung anhand der Beispiele 1 und 2 näher erläutert, ohne daß diese einschränkend wirken.

Beispiel 1

Eine Titandioxidhydratsuspension mit einem $TiO_2$-Gehalt von 25,5 Gew.-%, einem Sulfatgehalt von 7,5 Gew.-%, bezogen auf $TiO_2$, und einer BET-Oberfläche des Titandioxidhydrates von 280 m²/g wird in einem Heißgaszerstäubungsreaktor unter reduzierender Atmosphäre innerhalb 0,5 Sekunden bei 1050°C kalziniert. In der Reaktionskammer des Reaktors wird ein heißes Trägergas im Gegenstrom unter Verwirbelung dem Produktstrom entgegengeführt, wobei eine hochgradige und gleichmäßige Durchmischung des eingetragenen Gutes mit den heißen Gasen erfolgt. Die Produktabscheidung erfolgt außerhalb des Heißgaszerstäubungsreaktors in einem Zyklon. Das erhaltene Produkt besteht vorwiegend aus isometrischen Primärteilchen von etwa 0,5 μm, die überwiegend zu sphärolithischen Partikeln mit einem mittleren Durchmesser von 13 μm aggregiert sind. Die BET-Oberfläche beträgt 3,1 m²/g, das Schüttgewicht 0,5 kg/l, der Rutilanteil 61 %, der Sulfatgehalt 0,03 Gew.-%, bezogen auf $TiO_2$, und der $TiO_2$-Gehalt 99,5 Gew.-%.

Das Produkt klebt nicht und zeigt ein ausgezeichnetes Misch- und Aufschlußverhalten in einer Bortitanweißemailfritte. Nach Auftrag und Einbrand wird ein hohes Reflexionsvermögen, eine hohe Deckkraft und ein günstiger Farbton der Emaillierung erhalten.

Beispiel 2

Einer $TiO_2$-Hydratsuspension wie in Beispiel 1 beschrieben wird 1 Gew.-% Phosphorsäure bezogen auf $TiO_2$ zugesetzt. Anschließend wird unter reduzierender Atmosphäre 0,5 Sekunden bei 1080°C kalziniert. Das erhaltene Produkt besteht vorwiegend aus 0,7 μm großen Primärteilchen, die überwiegend zu sphärolithischen Partikeln mit einem mittleren Durchmesser von 16 μm aggregiert sind. Die BET-Oberfläche beträgt 2,8 m²/g, das Schüttgewicht 0,55 kg/l, der Rutilanteil 76 %, der Sulfatgehalt 0,02 Gew.-%, bezogen auf $TiO_2$, und der $TiO_2$-Gehalt 99,0 Gew.-%.

Das Produkt zeigt ein ausgezeichnetes Misch- und Aufschlußverhalten in der Emailfritte. Nach Auftrag und Einbrand wird eine sehr hohe Opazität bei blaustichigem Farbton im Email erhalten.

**Patentansprüche**

1. Titandioxid, dadurch gekennzeichnet, daß es überwiegend isometrische Primärteilchen der Größe von 0,5 bis 5,0 μm, die zu überwiegend sphärolithischen Partikeln mit Durchmessern von 1 bis 100 μm aggregiert sind, eine BET-Oberfläche von 1 bis 4,5 m²/g und ein Schüttgewicht von 0,2 bis 1,3 kg/l aufweist.

2. Titandioxid gemäß Anspruch 1, dadurch gekennzeichnet, daß es ein Schüttgewicht von 0,2 bis 0,8 kg/l aufweist.

3. Titandioxid gemäß einem der Ansprüche 1 oder 2, dadurch gekennzeichnet, daß es mit über 50 Gew.-% als Rutil vorliegt, einen Sulfatgehalt unterhalb 0,5 Gew.-%, vorzugsweise unterhalb 0,3 Gew.-%, gerechnet als Sulfat und auf Titandioxid bezogen, und einen $TiO_2$-Gehalt oberhalb 90 Gew.-% aufweist.

4. Titandioxid gemäß einem der Ansprüche 1 bis 3, dadurch gekennzeichnet, daß es Oxide, Phosphate und/oder Silikate der Metalle Li, Na und/oder K in einer Menge von bis zu 0,5 Gew.-%, bezogen auf Titandioxid und/oder Mg, Ca, Sr, Ba, Sn, Sb, Bi, Y, Zr, Zn, V, Nb, W und/oder Mo und/oder Oxide der Elemente P und/oder Si in einer Menge von bis zu 10 Gew.-%, vorzugsweise bis zu 5 Gew.-%, bezogen auf Titandioxid, enthält.

5. Verfahren zur Herstellung von Titandioxid gemäß einem der Ansprüche 1 oder 2, dadurch gekennzeichnet, daß Titandioxidhydrat mit einer BET-Oberfläche von 50 bis 500 m²/g einer Kurzzeitkalzination bei Verweilzeiten von 0,1 bis 60 Sekunden und bei Temperaturen von 800 bis 1600°C ausgesetzt wird.

6. Verfahren zur Herstellung von Titandioxid gemäß Anspruch 3, dadurch gekennzeichnet, daß Titandioxidhydrat mit einer BET-Oberfläche von 50 bis 500 m²/g, das vor der Kalzination bis zu 30 Gew.-% Sulfat bezogen auf Titandioxid enthält, einer Kurzzeitkalzination bei Verweilzeiten von 0,1 bis 60 Sekunden und bei Temperaturen von 800 bis 1600°C ausgesetzt wird.

7. Verfahren zur Herstellung von Titandioxid gemäß Anspruch 4, dadurch gekennzeichnet, daß Titandioxidhydrat mit einer BET-Oberfläche von 50 bis 500 m²/g, das vor der Kalzination Oxide, Phosphate und/oder Silikate der Metalle Li, Na und/oder K in einer Menge von bis 0,5 Gew.-%, bezogen auf Titandioxid und/oder Mg, Ca, Sr, Ba, Sn, Sb, Bi, Y, Zr, Zn, V, Nb, W und/oder Mo und/oder Oxide der Elemente P und/oder Si in einer Menge von bis zu 10 Gew.-%, vorzugsweise bis zu 5 Gew.-%, bezogen auf Titandioxid enthält und/oder Verbindungen enthält, die nach der Kalzination Oxide, Phosphate und/oder Silikate der genannten Elemente in den entsprechenden Mengen ergeben, einer Kurzzeitkalzination bei Verweilzeiten von 0,1 bis 60 Sekunden und Temperaturen von 800 bis 1600°C ausgesetzt wird.

8. Verfahren nach Anspruch 5 bis 7, dadurch gekennzeichnet, daß die Kalzination des $TiO_2$-Hydrats zwi-

4

schen 1000 und 1300°C bei Verweilzeiten von 0,1 bis 5 Sekunden erfolgt.

9. Verfahren nach Anspruch 5 bis 8, dadurch gekennzeichnet, daß schwefelsäurehaltiges TiO$_2$-Hydrat eingesetzt wird.

10. Verfahren nach Anspruch 5 bis 9, dadurch gekennzeichnet, daß das TiO$_2$-Hydrat in oxidierender oder reduzierender Atmosphäre kalziniert wird.

11. Verwendung des Titandioxids gemäß einem oder mehrerer der Ansprüche 1 bis 4 als Trübungsmittel bei der Herstellung von Emails oder Schmelzglasuren.

## Claims

1. Titanium dioxide, characterized in that it contains predominantly isometric primary particles between 0.5 and 5.0 μm in size, which are aggregated into predominantly spherolithic particles between 1 and 100 μm in diameter, and has a BET surface of 1 to 4.5 m²/g and an apparent density of 0.2 to 1.3 kg/l.

2. Titanium dioxide as claimed in claim 1, characterized in that it has an apparent density of 0.2 to 0.8 kg/l.

3. Titanium dioxide as claimed in claim 1 or 2, characterized in that it is more than 50% by weight rutile and has a sulfate content below 0.5% by weight and preferably below 0.3% by weight, expressed as sulfate and based on titanium dioxide, and a TiO$_2$ content above 90% by weight.

4. Titanium dioxide as claimed in any of claims 1 to 3, characterized in that it contains oxides, phosphates and/or silicates of the metals Li, Na and/or K in a quantity of up to 0.5% by weight, based on titanium dioxide, and/or Mg, Ca, Sr, Ba, Sn, Sb, Bi, Y, Zr, Zn, V, Nb, W and/or Mo and/or oxides of the elements P and/or Si in a quantity of up to 10% by weight and preferably up to 5% by weight, based on titanium dioxide.

5. A process for the production of the titanium dioxide claimed in claim 1 or 2, characterized in that titanium dioxide hydrate having a BET surface of 50 to 500 m²/g is subjected to short-time calcination for 0.1 to 60 seconds at temperatures of 800 to 1,600°C.

6. A process for the production of the titanium dioxide claimed in claim 3, characterized in that titanium dioxide hydrate having a BET surface of 50 to 500 m²/g, which contains up to 30% by weight sulfate - based on titanium dioxide - before calcination, is subjected to short-time calcination for 0.1 to 60 seconds at temperatures of 800 to 1,600°C.

7. A process for the production of the titanium dioxide claimed in claim 4, characterized in that titanium dioxide hydrate having a BET surface of 50 to 500 m²/g which, before calcination, contains oxides, phosphates and/or silicates of the metals Li, Na and/or K in a quantity of up to 0.5% by weight, based on titanium dioxide, and/or Mg, Ca, Sr, Ba, Sn, Sb, Bi, Y, Zr, Zn, V, Nb, W and/or Mo and/or oxides of the elements P and/or Si in a quantity of up to 10% by weight and preferably up to 5% by weight, based on titanium dioxide, and/or compounds which, after calcination, give oxides, phosphates and/or silicates of the said elements in the corresponding quantities is subjected to short-time calcination for 0.1 to 60 seconds at temperatures of 800 to 1,600°C.

8. A process as claimed in claims 5 to 7, characterized in the the TiO$_2$ hydrate is calcined for 0.1 to 5 seconds at 1,000 to 1,300°C.

9. A process as claimed in claims 5 to 8, characterized in that TiO$_2$ hydrate containing sulfuric acid is used.

10. A process as claimed in claims 5 to 9, characterized in that the TiO$_2$ hydrate is calcined in an oxidizing or reducing atmosphere.

11. The use of the titanium dioxide as claimed in one or more of claims 1 to 4 as an opacifier in the production of enamels or enamel glazes.

## Revendications

1. Dioxyde de titane **caractérisé en ce qu'**il présente des particules primaires principalement isométriques ayant une dimension de 0,5 à 5,0 μm et qui sont agglomérées à des particules principalement sphérolithiques ayant un diamètre de 1 à 100 μm, une surface BET de 1 à 4,5,m²/g et une densité apparente de 0,2 à 1,3 kg/l.

2. Dioxyde de titane selon la revendication 1, **caractérisé en ce qu'**il présente une densité apparente de 0,2 à 0,8 kg/l.

3. Dioxyde de titane selon l'une des revendications 1 ou 2, **caractérisé en ce qu'**il se présente sous forme de rutile en une quantité supérieure à 50% en poids, en présentant une teneur en sulfate inférieure à 0,5% en poids, de préférence inférieure à 0,3% en poids, calculé comme sulfate et rapporté au dioxyde de titane, ainsi qu'une teneur en TiO$_2$ supérieure à 90% en poids.

4. Dioxyde de titane selon l'une quelconque des revendications 1 à 3, **caractérisé en ce qu'**il contient des oxydes, des phosphates et/ou des silicates, des métaux Li, Na et/ou K en une quantité allant jusqu'à 0,5% en poids, rapportée au dioxyde de titane, et/ou de Mg, Ca, Sr, Ba, Sn, Sb, Bi, Y, Zr, Zn, V, Nb, W et/ou Mo et/ou des oxydes des éléments P et/ou Si en une quantité allant jusqu'à 10% en poids, de préférence jusqu'à 5% en poids, rapportée au dioxyde de titane.

5. Procédé pour la préparation de dioxyde de titane selon l'une quelconque des revendications 1 ou 2, **caractérisé en ce qu'**on expose l'hydrate de dioxyde de titane ayant une surface BET de 50 à 500 m²/g, à une calcination de courte durée avec des temps de séjour de 0,1 à 60 secondes et à des températures de 800 à 1600°C.

6. Procédé pour la préparation de dioxyde de titane selon la revendication 3, **caractérisé en ce qu'**on expose l'hydrate de dioxyde de titane ayant une surface BET de 50 à 500 m²/g, qui contient jusqu'à 30% en poids de sulfate avant la calcination, rapportés au dioxyde de titane, à une calcination de courte durée avec des temps de séjour de 0,1 à 60 secondes et à des températures de 800 à 1600°C.

7. Procédé pour la préparation de dioxyde de titane selon la revendication 4, **caractérisé en ce qu'**on expose l'hydrate de dioxyde de titane ayant une surface BET de 50 à 500 m²/g, qui contient, avant la calcination, des oxydes, des phosphates et/ou des silicates, des métaux Li, Na et/ou K en une quantité allant jusqu'à 0,5% en poids, rapportée au dioxyde de titane, et/ou de Mg, Ca, Sr, Ba, Sn, Sb, Bi, Y, Zr, Zn, V, Nb, W et/ou Mo et/ou encore des oxydes des éléments P et/ou Si en une quantité allant jusqu'à 10% en poids, de préférence jusqu'à 5% en poids, rapportée au dioxyde de titane et/ou qui contient des composés qui donnent, après la calcination, des oxydes, des phosphates et/ou des silicates des éléments mentionnés dans les quantités correspondantes, à une calcination de courte durée avec des temps de séjour de 0,1 à 60 secondes et à des températures de 800 à 1600°C.

8. Procédé selon les revendications 5 à 7, **caractérisé en ce que** la calcination de l'hydrate de TiO$_2$ a lieu entre 1000 et 1300°C, avec des temps de séjour de 0,1 à 5 secondes.

9. Procédé selon les revendications 5 à 8, **caractérisé en ce qu'**on met en oeuvre de l'hydrate de TiO$_2$ contenant de l'acide sulfurique.

10. Procédé selon les revendications 5 à 9, **caractérisé en ce qu'**on calcine l'hydrate de TiO$_2$ dans une atmosphère oxydante ou réductrice.

11. Utilisation du dioxyde de titane selon l'une quelconque des revendications 1 à 4, comme agent opacifiant lors de la préparation d'émaux ou de glaçures de fusion.